# EUROPÄISCHE PATENTSCHRIFT

(11) **EP 1 070 664 B1**
(45) Veröffentlichungstag und Bekanntmachung des Hinweises auf die Patenterteilung: **22.06.2005**
(21) Anmeldenummer: 00114129.0
(22) Anmeldetag: 11.07.2000
(51) Int. Cl.: B64F 1/32

(54) **Verfahren und Anordnung zur automatisierten Beförderung, Sortierung und Verladung von Gepäckstücken**
Method and device for automatically conveying, sorting and loading baggage
Procédé et dispositif pour le transport, le triage et le chargement automatiques des bagages

(30) Priorität: 21.07.1999 DE 19934095
(43) Veröffentlichungstag der Anmeldung: 24.01.2001
(73) Patentinhaber: ABB PATENT GmbH, 68526 Ladenburg (DE)
(72) Erfinder: Koini, Martin, 57636 Sörth (DE); Baier, Gunar, Dr. rer. nat., 68219 Mannheim (DE)
(74) Vertreter: Miller, Toivo

(56) Entgegenhaltungen:
- DE-A- 4 306 960
- GB-A- 2 224 147
- US-A- 5 842 555
- "FLEXIBLE SYSTEM TO HANDLE BAGGAGE" MECHANICAL ENGINEERING, ASME. NEW YORK, US, Bd. 119, Nr. 3, 1. März 1997 (1997-03-01), Seite 32,34 XP000693059 ISSN: 0025-6501
- PATENT ABSTRACTS OF JAPAN vol. 017, no. 610 (M-1508), 10. November 1993 (1993-11-10) & JP 05 185995 A (TOSHIBA CORP), 27. Juli 1993 (1993-07-27)

## Beschreibung

Die Erfindung betrifft ein. Verfahren zur automatisierten Beförderung, Sortierung und Verladung von Gepäckstücken in Flughafenanlagen, die eine mit einem Rechnersystem gekoppelte Gepäckförderanlage aufweisen, welche das Gepäck von einem Check-In-Bereich zu einer Gepäckhalle fördert, von wo es zur Verladung in Flugzeuge gelangt.

Die automatisierte Beförderung und Sortierung von Gepäckstücken ist bereits in vielen größeren Flughäfen, realisiert. Diese Anlagen dienen dazu, Gepäckstücke von verschiedenen Einschleusungsstellen, zum Beispiel Check-In-Bereich, zielgerichtet zum Beispiel bezüglich Flugnummer und Flugklasse, zu entsprechenden Verladestationen zu transportieren, bei denen die Gepäckstücke manuell für den Transport zum Flugzeug in geeignete Verlademittel, wie Karren oder Container) umgeladen werden.

Der Transport der Gepäckstücke erfolgt hierbei durch fördertechnische Einrichtungen wie Förderbänder, Schalentransportsysteme (Endlosband mit aneinandergefügten Transportschalen) oder geführten Fahrzeugen.

Zur Sortierung des Gepäcks in einem solchen System erfolgt eine manuelle oder automatisierte Gepäckdatenerkennung nach Flugziel, Fluglinie, Flugklasse, wobei die entsprechenden Daten auf an dem Gepäckstück befestigten Datenträgern, üblicherweise: Papierstreifen mit Bar Code festgehalten sind. die entsprechenden Daten auf an dem jeweiligen Gepäckstück befestigten Datenträgem, üblicherweise Papierstreifen mit Bar Code, festgehalten sind.

Die einzelnen Gepäckstücke werden weiterhin innerhalb der Förderanlage so räumlich voneinander getrennt, daß eine eindeutige Verfolgung des Gepäckstückes beim Transport gewährleistet ist. Bei Anlagen mit Förderbändern erfolgt dies durch die Gewährleistung eines Mindestabstandes zwischen den Gepäckstücken, ansonsten durch die Zuordnung des Gepäckstückes zu einem definierten Element der Fördereinrichtung, zum Beispiel Schale oder Wagen.

Das Transportziel der Gepäckstücke in der Anlage ist eine Verladestation. Diese werden hierbei bestimmten Flügen, gegebenenfalls auch Anschlußflugzielen und/oder Passagierklassen zugeordnet.

Innerhalb des Automatisierungssystems der Anlage werden die Informationen zum Gepäckstück und seinem Aufenthaltsort in der Anlage mit dem Transportziel verknüpft und in Steuerbefehle für die Anlage umgesetzt. Die Gepäckstücke werden zu der entsprechenden Verladestation transportiert und dort ausgeschleust.

Die wesentlichen heute eingeführten technischen Ausführungen und Verfahren sind im "Airport Development Reference Manual" und im "Passenger Services Conference Resolutions Manual" der IATA nachvollziehbar dargestellt.

Alle bekannten Verfahren und Systeme beziehen sich hierbei allerdings nur auf den Transport und die Sortierung der Gepäckstücke. Die Verladung erfolgt manuell und ist nicht Teil des automatisierten Transportprozesses.

Bisherige Versuche, auch diesen Verfahrensschritt zu automatisieren, sind gescheitert, da es nicht gelungen ist, für die zu behandelnde Vielfalt an Gepäckstück-

Die in anderen Industrieanwendungen, zum Beispiel Palettierung von Paketen, bereits realisierten Lösungen sind nicht übertragbar, da die dort entwickelten Lösungen , wie zum Beispiel Roboter mit speziellen Greifwerkzeugen, nur für jeweils sehr begrenzte Bandbreiten an Formen, Strukturen, Abmessungen etc. anwendbar sind.

Ein wesentlicher Nachteil der bekannten Anordnungen und Verfahren ist darin zu sehen, daß die Verladung der Gepäckstücke auf die Transportmittel für den Weitertransport zum Flugzeug manuell erfolgt. Zum einen bedingt dies einen hohen Personaleinsatz und damit hohe Kosten bei der Verladetätigkeit, zum anderen ist die manuelle Verladung für die Beschäftigten mit einer hohen körperlichen Anstrengung verbunden.

Ein Ersatz der manuellen Verladung durch eine automatisierte Station, zum Beispiel mit Robotern, unter Beibehaltung der heutigen Verfahren und Anordnungen für Transport und Sortierung ist auf Grund der Einschränkungen in der Handhabungstechnologie bzw. der zu behandelnden Vielfalt an Gepäckstücken für den praktischen Einsatz nicht realisierbar.

Ein Sortiersystem zur Handhabung von Gepäckstücken auf Flughäfen ist aus der GB 2 224 147 A bekannt geworden. Bei diesem bekannten mit einem Zentralrechner zusammenarbeitenden System werden spur-gelenkte Transportmittel eingesetzt, auf welche die einzelnen zuvor hinsichtlich des betreffenden Transportmittels und ihres Bestimmungsortes erfaßten und entsprechend markierten Gepäckstücke abgelegt werden. Anschließend werden sie auf die jeweiligen dem Bestimmungsort entsprechenden Transportmittel abgelegt, von hierfür vorgesehenen Erfassungsmitteln erfaßt, deren Daten jeweils dem Zentralrechner übermittelt werden, und zur Verladung transportiert. Die Aufgabe des Zentralrechners beschränkt sich hierbei darauf, die Steuerung der Transportmittel zum vorgesehenen Verladeort zu gewährleisten.

Ausgehend von diesem Stand der Technik liegt der Erfindung daher die Aufgabe zugrunde, ein Verfahren der eingangs genannten Art sowie seine technische Realisierung anzugeben, das eine Automatisierung des gesamten Transport-, Sortier- und Verladeprozesses erlaubt.

Diese Aufgabe wird erfindungsgemäß durch die kennzeichnenden Merkmale des Patentanspruchs 1 gelöst.
Dementsprechend ist vorgesehen, daß
in einem ersten Schritt für jedes Gepäckstück dessen Flugklasse sowie dessen Gewicht, Form, Volumen und Konsistenz erfaßt und registriert werden, daß
in einem zweiten Schritt die erfaßten Gepäckdaten in ein Rechnersystem, ein sogenannter Packrechner eingegeben werden, welches die Gepäckstücke in vorgegebene Klassen einteilt und eine optimale Zuordnung zu den Verlademitteln entsprechend Klassifizierung und Flugziel bestimmt, und daß
in einem dritten Schritt die Lademittel der Verladereihenfolge gemäß durch ein automatisches Transportsystem einzelnen Verladestationen zugeführt werden und daß
in einem vierten Schritt die so klassifizierten Gepäckstücke entsprechend der festgelegten Zuordnung zu Verladestationen in einer für den Verladevorgang erforderlichen Reihenfolge zur Verladung gebracht werden.

Der Kern der Erfindung ist also die Neugestaltung des Gepäckhandhabungsprozesses auf Flughäfen, die mit einer automatisierten Gepäckförderanlagen ausgerüstet sind oder ausgerüstet werden. Hierbei erfolgt die Sortierung der Gepäckstücke und deren Zuordnung zu den Verladestationen nicht, wie heute realisiert, nach Flugziel und gegebenenfalls Flugklasse, sondern zusätzlich noch entsprechend der Gepäckart beziehungsweise der für das spezifische Gepäckstück geeigneten Handhabungseinrichtung.

Dies ermöglicht zum einen, daß den erfindungsgemäß automatisierten Verladestationen nur Gepäck einer bestimmten Klassifizierung zugeführt wird. Zum anderen bedingt dies aber auch, daß die einem bestimmten Flug zugeordneten Verlademittel, wie Container und Karren, die den Transport von der Gepäckanlage zu den jeweiligen Flugzeugen übernehmen, an verschiedenen Verladestationen mit Gepäck beladen werden müssen.

Das erfindungsgemäße Verfahren zur Gepäckhandhabung und seine Weiterbildungen umfassen dementsprechend folgende Schritte:
1. Automatisierte Erfassung der Gepäckeigenschaften, das heißt neben dem zugehörigem Passagier, dem Flugziel und der Flugklasse zusätzlich noch Gewicht, Form, Volumen, Konsistenz des Gepäckstücks.
   Übermittlung der Gepäckdaten an einen Teil des Rechnersystems ("Packrechner"), der die Gepäckstücke in vorgegebene Klassen einteilt und, entsprechend
2. Klassifizierung und Flugziel, eine optimale Zuordnung zu den Verlademitteln ermittelt. Die Optimierung erfolgt hierbei sowohl betreffs einer möglichst hohen Packungsdichte in den Verlademitteln als auch betreffs einer für die einzelnen Gepäckstücke möglichst schonenden Reihenfolge bei der Verladung. So werden zum Beispiel schwere und harte Teile zuerst verladen, während weiche und leichte Teile anschließend auf diese Teile gestapelt werden.
3. Zuordnung der Gepäckstücke und der Verlademittel zu bestimmten Verladestationen, entsprechend der Gepäckklassifizierung und der Pack- beziehungsweise Stapelplanung gemäß Schritt 2 und entsprechend dem Flugziel. Die einer Verladestation zugeordneten Gepäckstücke können hierbei verschiedene Flugziele aufweisen, gehören aber immer einer bestimmten Gepäckklasse an. Die Zuordnung erfolgt in einem weiteren Teil des Rechnersystems ("Sortierrechner"), der auch die Übergabe der Daten an das Automatisierungssystem der Gepäckförderanlage übernimmt.
4. Sortierung und Transport der Gepäckstücke zu den jeweiligen Verladestationen.
5. Transport der Verlademittel zu den jeweiligen Verladestationen und Verladung der Gepäckstücke innerhalb der ihnen zugeordneten Verladestationen. Je nach Gepäckklasse können hierzu automatisierte, halbautomatisierte oder manuelle Verladestationen eingesetzt werden.

Hierbei ist es von besonderer Bedeutung, daß die Erfassung des Volumens und der Kontur der Gepäckstücke sowie der Konsistenz selbsttätig ohne Beteiligung von Personen erfolgt.

Vorteilhafterweise werden die Daten bezüglich Zielort des Gepäckstückes sowie dessen Eigenschaften wie Gewicht, Volumen, Form und Konsistenz, während des Check-In des betreffenden Fluggastes erfaßt und gespeichert, wobei die erfaßten Daten unmittelbar im Rechner der Gepäckförderanlage oder auf Datenträgem gespeichert werden, welche an den Gepäckstücken angebracht werden und beim Durchlaufen des Verladeweges automatisch von hierfür vorgesehenen optischen oder elektronischen Lesegeräten erfaßt werden, um den Verladevorgang zu steuern.
Eine zweckmäßige Weiterbildung der Erfindung besteht darin , daß der Verladevorgang der Gepäckstücke mit Hilfe von optischen Bilderkennungssystemen überwacht wird, mittels welcher die jeweilige Lage der Gepäckstücke erkannt und bedarfsweise unter Mitwirkung von mechanischen Werkzeugen, zum Beispiel Greifwerkzeuge, korrigiert wird, wobei die jeweilige Lage der Gepäckstücke bedarfsweise, insbesondere bei auftretenden Störungen, vom Bilderkennungssystem angezeigt wird und mit Hilfe einer dreidimensionalen Visualisierung durch einen Operator der Einsatz der mechanischen Werkzeuge, zum Beispiel Greifwerkzeuge, gesteuert wird, um die gemeldeten Störungen zu beseitigen.

Eine weitere Aufgabe der Erfindung besteht darin, eine Anordnung zur Durchführung des zuvor beschriebenen Verfahrens anzugeben, die von einer in einer Flughafenanlage angeordneten Gepäckförderanlage gebildet ist, die mit einem Rechnersystem verbunden ist, welches die Bewegung der Fördermittel und Steuerungen kontrolliert, wobei die Gepäckförderanlage wenigstens eine Aufgabestation und wenigstens eine Sammelstation aufweist, sowie mit wenigstens einer Verladestation.

Zur Lösung dieser Aufgabe ist vorgesehen, daß
im Bereich der Aufgabestation Mittel vorgesehen sind, welche selbsttätig bestimmte Kenngrößen der aufgegebenen Gepäckstücke, wie Gewicht, Form, Volumen und Konsistenz sowie Flugziel und Flugklasse, erfassen und diese Daten einem Rechner zur Verfügung stellen, welcher die Gepäckförderanlage kontrolliert, und entsprechend den jeweiligen Daten den Transport der Gepäckstücke an die zugeordnete Verladestation steuert.

Entsprechend einer bevorzugten Weiterbildung der erfindungsgemäßen Anordnung können für die Verladung automatisierte Verladewerkzeuge, wie zum Beispiel Roboter und/oder Greifwerkzeuge, vorgesehen sein.

Gemäß einer vorteilhaften Ausgestaltung der zuvor beschriebenen Anordnung kann ferner eine automatisierte Transportvorrichtung für die Überführung der Verlademittel zu den Verladestationen vorgesehen sein.

Diese und weitere Merkmale der Erfindung sind Gegenstand der Unteransprüche sowie in der nachfolgenden Beschreibung eines Ausführungsbeispieles angegeben.

Anhand eines in der beigefügten Zeichnung dargestellten Ausführungsbeispieles sollen die Erfindung, bevorzugte Ausgestaltungen der Erfindung sowie der erfindungsgemäße Verfahrensablauf und weitere Merkmale der Erfindung näher erläutert und beschrieben werden.

Es zeigen:
- Fig. 1: ein Ablaufdiagramm für das erfindungsgemäße Verfahren;
- Fig. 2: eine schematische Übersichtsskizze für eine erfindungsgemäße Gepäckförderanlage mit inselartigen Verladestationen und
- Fig. 3: eine schematisierte Draufsicht auf eine einzelne inselartige Verladestation mit Robotern (vergrößerter Ausschnitt aus Fig. 2).

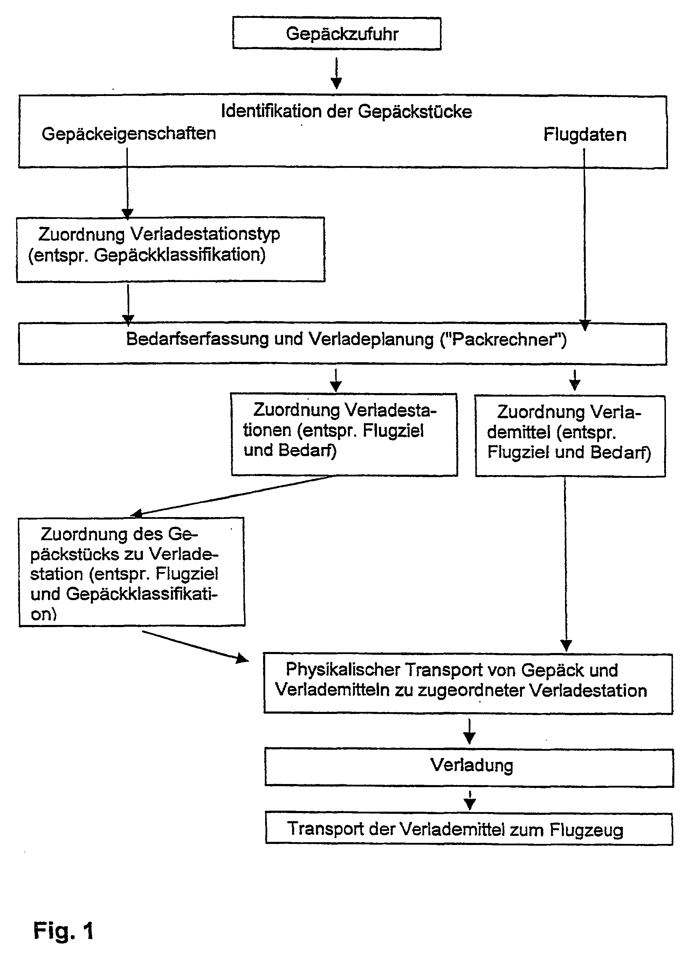

In dem in Fig.1 gezeigten Ablaufdiagramm ist der erfindungsgemäße Verfahrensablauf schematisch angegeben, der weitgehend selbsterklärend dargestellt ist und in Verbindung mit den vorstehenden sowie mit den hier im folgenden gegebenen Erläuterungen verständlich ist.

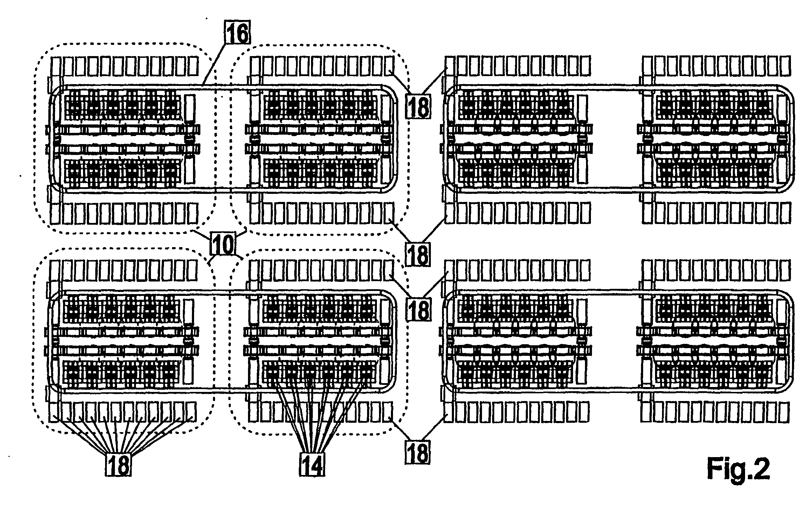

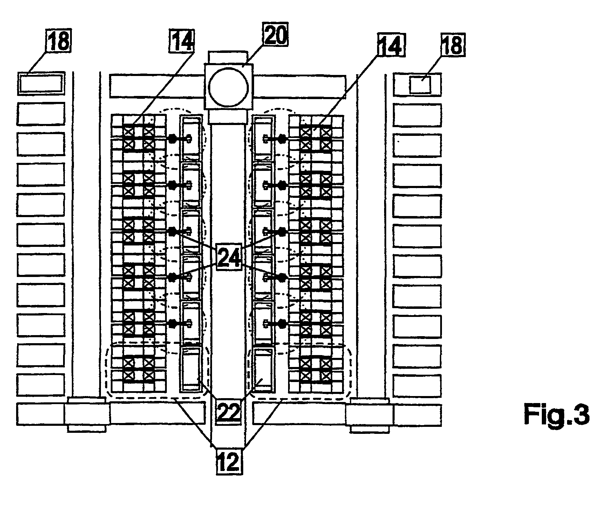

Die Fig. 2 und 3 zeigen eine exemplarische Ausführung einer Gepäckförderanlage, mit der das oben beschriebene Verfahren realisiert werden kann. Die Zeichnung zeigt hierbei nur den für das automatisierte Verladen wesentlichen Teil der Anordnung, da die Fördertechnik weiterhin den bekannten Anordnungen aus heutigen Systemen entspricht.

In Fig. 2 sind einzelne als Ladeinseln bezeichnete Ladebereiche 10 nebeneinander angeordnet, welche einzelne Ladestationen bilden. Die Ladeinseln 10 weisen jeweils Handhabungsstationen 12, dynamische Zwischenspeicher 14 für Gepäckstücke, Gepäckzufuhr 16 sowie Verlademittel 18, wie zum Beispiel Container, Wagen oder Karren, auf, welche mit einem Transportsystem für Verlademittel 20 zusammenarbeiten.

In Fig. 3 ist eine einzelne Verladeinsel 10 dargestellt, welche beispielhaft zwei Verladeplätze 22 zum manuellen Verladen aufweist sowie im gezeigten Beispiel zehn mit Verladerobotern 24 versehene Hauptladeplätze 26. Die weiteren Merkmale sind bereits in Fig. 2 gezeigt und dort erläutert.

Demgemäß besteht die Anlage im wesentlichen aus den folgenden Sub-Systemen mit den jeweils angegebenen Einzelfunktionen:
- Gepäckzuführung aus dem Check-in-Bereich oder Transfergepäckeinschleusung mit herkömmlicher Technik
- Gepäcksortierung und Gepäcktransport :
   - Die mechanische Ausführung erfolgt entsprechend dem Stand der Technik. Wesentliche erfindungsgemäße Neuerungen betreffen zusätzliche Maßnahmen und Einrichtungen zur Gepäckidentifikation und Gepäckklassifizierung, wie Meß- und Rechnersysteme.

Die Gepäckeigenschaften können hierbei über verschiedene meßtechnische Einrichtungen erfaßt werden. Für die erfindungsgemäße Ausführung des Verfahrens ist die Auswahl der eingesetzten Meßmittel ohne Bedeutung, wesentlich ist nur, daß die wesentlichen, das Gepäckstück charakterisierenden Eigenschaften zuverlässig erfaßt und dem Rechnersystem zugeführt werden können.
Diese Eigenschaften sind
Flugziel und Flugklasse,
deren Erfassung durch manuelle oder automatisierte Eingabe der Daten beim Check-in entsprechend dem Stand der Technik erfolgt. Die Daten können hierbei entweder direkt in das Rechnersystem der Gepäckförderanlage eingegeben werden oder sie werden auf Speichermedien übertragen, die dann innerhalb der Gepäckförderanlage ausgelesen werden. Beim heutigen Stand der Technik erfolgt dies durch die sogenannten baggage tags (Papierstreifen mit bar code), die optisch ausgelesen werden. Gemäß der Erfindung können nunmehr hierzu auch Radiofrequenz-Transponder eingesetzt, bei denen eine größere Anzahl an Daten registriert werden kann, und die teilweise auch nachträglich noch beschrieben werden können. Diese für das erfindungsgemäße Verfahren vorgesehene Technologie erlaubt eine deutliche Verbesserung des Datenmanagements, ist aber für die Umsetzung der Erfindung nicht zwingend notwendig.

### Gewicht:

Die Gewichtserfassung kann sowohl beim Check-in erfolgen als auch durch eine in die Förderanlage integrierte Waage

### Volumen/Kontur:

Die Volumen- und Konturvermessung der Gepäckstücke kann auf zwei Arten erfolgen, nämlich mittels
optischer Systeme, zum Beispiel durch eine Anordnung von Lichtemittern und Lichtdetektoren beziehungsweise durch Auswertung eines Bilderfassungssystems oder mittels
Röntgenstrahlung, indem die bei der Sicherheitsprüfung des Gepäcks eingesetzten Geräte auch dazu verwendet werden, die Kontur und das Volumen der Gepäckstücke zu detektieren.

### Konsistenz:

Für die Bestimmung der Konsistenz, das heißt im wesentlichen Prüfung der Oberflächeneigenschaften der Gepäckstücke auf die Kriterien: hart/weich, glatt/rauh, flach/strukturiert, .etc. ist der Einsatz einer Kombination von meßtechnischen Einrichtungen vorgesehen, zum Beispiel taktile Sensoren, Bilderkennungsverfahren und Ermittlung der chemischen Zusammensetzung mittels Röntgenanalyse.

### • Verladestationen

Die Verladestationen bestehen im wesentlichen aus drei Sub-Systemen:
Dynamischer Zwischenspeicher für den Transfer des Gepäcks zwischendemTransportsystem und der Handhabungseinrichtung.
Dieses Sub-System ist nicht zwingend notwendig für das in der Erfindung beschriebene Verfahren, ist aber zweckmäßig, wenn das Verfahren in Gepäckförderanlagen mit einer hohen geforderten Durchsatzleistung eingesetzt werden sollen. Eine mögliche Realisierung ist in der Anmeldungsschrift mit dem Aktenzeichen **199 31 756.9** dargestellt.

### Handhabungseinrichtungen zur Verladung des Gepäcks in die Verlademittel

Je nach Gepäckkategorie erfolgt die Verladung voll- oder halbautomatisiert. Für Ausnahmefälle (unförmige oder sehr empfindliche Gepäckstücke) sind auch rein manuelle Verladeplätze vorzusehen. Die (teil-) automatisierten Handhabungseinrichtungen können z.B. durch den Einsatz von Robotern realisiert werden. Diese sind, je nach Gepäckkategorie, mit entsprechenden Greifwerkzeugen versehen, zum Beispiel Sauggreifer, mechanische Greifer etc.. Zweckmäßigerweise werden Roboter mit Wechselgreifern eingesetzt, so daß an einer Station verschiedene Greifwerkzeuge verwendet werden können und somit eine größere Flexibilität in der Anwendung ermöglicht wird.

Überwachungs- und Steuerungseinrichtungen für die Überwachung und Korrektur des Verladevorgangs.
Für die Überwachung und Steuerung des Verladevorganges können beispielhaft optische Bilderkennungssysteme eingesetzt werden. Diese Systeme erfassen z.B. die genaue Lage des angelieferten Gepäckstückes und richten dementsprechend die Greifwerkzeuge und den Roboter aus. Weiterhin wird über die optische Bilderkennung der Stapelvorgang in die Verlademittel überwacht, um Fehler beim Abladen der Gepäckstücke zu erkennen und Abhilfemaßnahmen zu initiieren.

Sowohl bei der Korrektur von Verladefehlern als auch für die semi-automatische Verladung bei komplexeren Gepäckstücken oder bei komplexeren Stapelvorgängen muß ein Eingriff durch einen Operator ermöglicht werden. Dieser Eingriff erfolgt so, daß kein direkter Zutritt in die Verladestation nötig ist, da ansonsten aus Sicherheitsgründen die Station zunächst abgeschaltet werden müßte (Zeitproblem). Dies kann zum Beispiel durch ein auf Virtual Reality-Technologien basiertes Steuersystem erreicht werden, bei dem über ein Bilderkennungssystem die Verladesituation in 3D und Echtzeit visualisiert wird und der Operator ohne direkten manuellen Eingriff Steuerungs- und Korrekturvorgänge durchführen kann.

### Transportsystem für die Verlademittel

Entsprechend der Zuordnung von Gepäckstücken und Verlademitteln (Schritt 3 des Verfahrens) werden die Verlademittel über ein Transportsystem den einzelnen Verladestationen zeitgerecht zugeführt. Dieser Transport kann zum Beispiel über ein Förderband oder ein schienengebundenes Transportfahrzeug erfolgen, auf das die Verlademittel aufgesetzt werden.

In dem in Fig. 2 und 3 dargestellten Ausführungsbeispiel sind die verschiedenen Verladestationen für die verschiedenen Gepäckkategorien zu "Verladeinseln" zusammengefaßt. In einer solchen Ausführung würden einer Verladeinsei zum Beispiel 5 Flugziele zugeordnet. Die für diese Flüge benötigten Verlademittel würden in das zugehörige Transportsystem eingebracht und dann an den Verladestationen vorbeigeführt. Die Sortierung der Gepäckstücke erfolgt so, daß an diese Verladeinsel nur Gepäckstücke für die zugeordneten Flüge transportiert wird. Die Gepäckstücke werden dann entsprechend ihrer Kategorie der passenden Handhabungsstation zugeordnet, zum Beispiel Hartschalenkoffer, Rucksäcke.

Innerhalb des dynamischen Zwischenspeichers werden die Gepäckstücke zunächst gespeichert und dann an die Handhabungseinrichtung ausgeschleust, wenn das ihrem Flugziel zugeordnete Verlademittel ebenfalls an der Handhabungsstation angekommen ist. Zweckmäßigerweise werden die Handhabungsstationen so angeordnet, daß in den ersten von den Verlademitteln angefahrenen Stationen zunächst die schweren und harten Gepäckstücke verladen werden.

## Patentansprüche

1. Verfahren zur automatisierten Beförderung, Sortierung und Verladung von Gepäckstücken in Flughafenanlagen, die eine Gepäckförderanlage aufweisen, welche das Gepäck von einem Check-In-Bereich zu einer Gepäckhalle fördert, von wo es zur Verladung in Flugzeuge gelangt, wobei für jedes Gepäckstück dessen Flugziel erfaßt und in ein Rechnersystem eingegeben wird und die so behandelten Gepäckstücke entsprechend der festgelegten Zuordnung zu Verladestationen zur Verladung gebracht werden,
**dadurch gekennzeichnet, daß**
in einem ersten Schritt für jedes Gepäckstück dessen Flugklasse sowie dessen Gewicht, Form, Volumen und Konsistenz erfaßt und registriert werden, und daß
in einem zweiten Schritt die zusätzlich erfaßten Gepäckdaten in ein Rechnersystem eingegeben werden, welches die Gepäckstücke in vorgegebene Klassen einteilt und eine optimale Zuordnung zu den Verlademitteln entsprechend Klassifizierung und Flugziel bestimmt.

2. Verfahren nach Anspruch 1 **dadurch gekennzeichnet, daß** die Verladung der Gepäckstücke entsprechend der Klassifizierung nach ihrem Gewicht und ihrer Konsistenz schonend erfolgt, indem harte und/oder schwere Gepäckstücke bodennah angeordnet werden und daß weiche und leichte Gepäckstücke darauf gestapelt werden.

3. Verfahren nach einem der Ansprüche 1 oder 2 **dadurch gekennzeichnet, daß** die Verladung der Gepäckstücke entsprechend ihrer Zuordnung zu Gepäckklassen und Flugzielen erfolgt.

4. Verfahren nach Anspruch 3 **dadurch gekennzeichnet, daß** die Zuordnung der Gepäckstücke zu Gepäckklassen und Flugzielen durch einen die Gepäckförderanlage kontrollierenden Rechner erfolgt, der auch den Datentransfer an die Gepäckförderanlage durchführt.

5. Verfahren nach einem der vorherigen Ansprüche 1 bis 4 **dadurch gekennzeichnet, daß** die Daten bezüglich Zielort des Gepäckstückes sowie dessen Eigenschaften wie Gewicht, Volumen, Form und Konsistenz, während des Check-In des betreffenden Fluggastes erfaßt und gespeichert werden.

6. Verfahren nach einem der vorherigen Ansprüche 1 bis 5 **dadurch gekennzeichnet, daß** die Erfassung des Volumens und der Kontur der Gepäckstücke sowie der Konsistenz selbsttätig ohne Beteiligung von Personen erfolgt.

7. Verfahren nach Anspruch 5 oder 6 **dadurch gekennzeichnet, daß** die erfaßten Daten unmittelbar im Rechner der Gepäckförderanlage gespeichert werden.

8. Verfahren nach Anspruch 7 **dadurch gekennzeichnet, daß** die erfaßten Daten auf Datenträgern gespeichert werden, welche an den Gepäckstücken angebracht werden und beim Durchlaufen des Verladeweges automatisch von hierfür vorgesehenen optischen oder elektronischen Lesegeräten erfaßt werden, um den Verladevorgang zu steuern.

9. Verfahren nach einem der vorherigen Ansprüche 1 bis 8 **dadurch gekennzeichnet, daß** der Verladevorgang der Gepäckstücke mit Hilfe von optischen Bilderkennungssystemen überwacht wird, mittels welcher die jeweilige Lage der Gepäckstücke erkannt und bedarfsweise unter Mitwirkung von mechanischen Werkzeugen, zum Beispiel Greifwerkzeuge, korrigiert wird.

10. Verfahren nach Anspruch 9 **dadurch gekennzeichnet, daß** die jeweilige Lage der Gepäckstücke bedarfsweise, bei auftretenden Störungen, vom Bilderkennungssystem angezeigt wird und daß mit Hilfe einer dreidimensionalen Visualisierung durch einen Operator der Einsatz der mechanischen Werkzeuge, zum Beispiel Greifwerkzeuge, gesteuert wird, um Störungen zu beseitigen.

11. Vorrichtung zur Durchführung des Verfahrens nach einem der vorherigen Ansprüche mit einer insbesondere in einer Flughafenanlage angeordneten mit Mitteln zur Erfassung des jeweiligen Flugziels versehenen Gepäckförderanlage, die mit einem Rechnersystem verbunden ist, welches die Bewegung der Fördermittel und Steuerungen kontrolliert, wobei die Gepäckförderanlage wenigstens eine Aufgabestation und wenigstens eine Sammelstation aufweist, sowie mit wenigstens einer Verladestation,
**dadurch gekennzeichnet, daß**
im Bereich der Aufgabestation weitere Mittel vorgesehen sind, welche selbsttätig bestimmte Kenngrößen der aufgegebenen Gepäckstücke, wie Gewicht, Form, Volumen und Konsistenz sowie Flugklasse, erfassen und diese Daten dem Rechner zur Verfügung stellen, welcher die Gepäckförderanlage kontrolliert, und entsprechend den jeweiligen Daten den Transport der Gepäckstücke an die zugeordnete Verladestation steuert.

12. Anordnung nach Anspruch 11, **dadurch gekennzeichnet, daß** für die Verladung automatisierte Verladewerkzeuge, wie zum Beispiel Roboter und/oder Greifwerkzeuge, vorgesehen sind.

13. Anordnung nach Anspruch 11 oder 12, **dadurch gekennzeichnet, daß** eine automatisierte Transportvorrichtung für die Überführung von Verlademitteln zu den Verladestationen vorgesehen ist.

## Claims

1. Process for the automated conveying, sorting and loading of baggage items in airports which have a baggage-conveying facility which conveys the package from a check-in region to a baggage area, from where it is transported for loading into aircraft, it being the case that, for each baggage item, the flight destination thereof is recorded and entered into a computer system and the baggage items handled in this way are transported for loading in accordance with the defined assignment to loading stations, **characterized in that**, in a first step, for each baggage item, the flight destination and travel class thereof as well as weight, shape, volume and consistency thereof are recorded and registered, and **in that**, in a second step, the additionally recorded baggage data are entered into a computer system which divides the baggage items into predetermined classes and determines optimum assignment to the loading means in accordance with classification and flight destination.

2. Process according to Claim 1, **characterized in that** the loading of the baggage items takes place carefully in accordance with the classification in terms of their weight and their consistency, **in that** hard and/or heavy baggage items are arranged in the vicinity of the bottom, and that soft and lightweight baggage items are stacked thereon.

3. Process according to either of Claims 1 and 2, **characterized in that** the loading of the baggage items takes place in accordance with the assignment thereof to baggage classes and flight destinations.

4. Process according to Claim 3, **characterized in that** the assignment of the baggage items to baggage classes and flight destinations takes place by a computer which controls the baggage-conveying facility and also carries out the data transfer to the baggage-conveying facility.

5. Process according to one of the preceding claims, Claims 1 to 4, **characterized in that** the data relating to destination of the baggage item and the properties thereof such as weight, volume, shape and consistency are recorded and stored during check-in of the relevant passenger.

6. Process according to one of the preceding claims, Claims 1 to 5, **characterized in that** the recording of the volume and of the contour of the baggage items and of the consistency takes place automatically without anyone being involved.

7. Process according to Claim 5 or 6, **characterized in that** the recorded data are stored directly in the computer of the baggage-conveying facility.

8. Process according to Claim 7, **characterized in that** the recorded data are stored on data carriers which are provided on the baggage items and, during passage through the loading path, are automatically detected by optical or electronic reader units provided for this purpose, in order to control the loading operation.

9. Process according to one of the preceding claims, Claims 1 to 8, **characterized in that** the loading operation of the baggage items is monitored with the aid of optical image-recognition systems by means of which the respective position of the baggage items is detected and corrected, if required, with the aid of mechanical tools, for example gripping tools.

10. Process according to Claim 9, **characterized in that** the respective position of the baggage items is indicated by the image-recognition system if required, with the occurrence of disruptions, and **in that**, with the aid of three-dimensional visualization, the use of the mechanical tools, for example gripping tools, is controlled by an operator in order to eliminate disruptions.

11. Apparatus for implementing the process according to one of the preceding claims, having a baggage-conveying facility which is arranged in particular in an airport, is provided with means for detecting the respective flight destination and is connected to a computer system which controls the movement of the conveying means and control means, the baggage-conveying facility having at least one supply station and at least one collecting station, and having at least one loading station, **characterized in that** provided in the region of the supply station are further means which record automatically determined characteristic variables of the supplied baggage items, such as weight, shape, volume and consistency as well as travel class, and make these data available to the computer which controls the baggage-conveying facility and, in accordance with the respective data, controls the transportation of the baggage items to the associated loading station.

12. Arrangement according to Claim 11, **characterized in that** automated loading tools, for example robots and/or gripping tools, are provided for the loading.

13. Arrangement according to Claim 11 or 12, **characterized in that** an automated transporting apparatus is provided for the transfer of loading means to the loading stations.

## Revendications

1. Procédé pour le transport, le tri et le chargement automatisés de bagages dans des installations aéroportuaires équipées d'une installation de transport de bagages, qui assure le transport du bagage depuis une zone d'enregistrement jusqu'à une halle à bagages d'où il est acheminé pour chargement dans des avions, la destination de chaque bagage étant saisie et entrée dans un système d'ordinateur et les bagages ainsi traités étant amenés pour chargement à des postes de chargement conformément au tri établi, **caractérisé par le fait**
**qu'**au cours d'une première étape, on saisit et on enregistre pour chaque bagage, sa classe de vol ainsi que son poids, sa forme son volume et sa consistance, et
**qu'**au cours d'une deuxième étape, on transmet les données de bagage supplémentaires saisies à un système d'ordinateur qui répartit les bagages dans des classes prédéfinies et détermine une affectation optimale vis-à-vis des moyens de chargement conformément à la classification et à la destination.

2. Procédé selon la revendication 1, **caractérisé par le fait que** le chargement des bagages conformément à la classification selon leur poids et leur consistance est effectué de manière à les ménager, en ce sens que les bagages durs et/ou lourds sont disposés près du sol et que les bagages souples et légers sont empilés sur ceux-ci.

3. Procédé selon une des revendications 1 ou 2, **caractérisé par le fait que** le chargement des bagages a lieu conformément à leur affectation par classes de bagages et par destinations de vol.

4. Procédé selon la revendication 3, **caractérisé par le fait que** l'affectation des bagages par classes de bagages et par destinations est effectuée par un ordinateur, qui contrôle l'installation de transport et assure également le transfert de données vers l'installation de transport de bagages.

5. Procédé selon une des revendications 1 à 4 précédentes, **caractérisé par le fait que** les données concernant la destination du bagage ainsi que ses caractéristiques, telles que son poids, son volume, sa forme et sa consistance, sont saisies et mémorisées lors de l'enregistrement du passager concerné.

6. Procédé selon une des revendications 1 à 5 précédentes, **caractérisé par le fait que** la saisie du volume et du contour du bagage ainsi que de sa consistance a lieu de manière automatique, sans l'intervention de personnel.

7. Procédé selon la revendication 5 ou 6, **caractérisé par le fait que** les données saisies sont mémorisées directement dans l'ordinateur de l'installation de transport de bagages.

8. Procédé selon la revendication 7, **caractérisé par le fait que** les données saisies sont enregistrées sur des supports de données, qui sont placés sur les bagages et sont lus de manière automatique sur le trajet de chargement par des lecteurs optiques ou électroniques prévus à cet effet, aux fins de contrôler le processus de chargement.

9. Procédé selon une des revendications 1 à 8 précédentes, **caractérisé par le fait que** le processus de chargement des bagages est surveillé au moyen de systèmes optiques de reconnaissance d'images à l'aide desquels la position des bagages est détectée et le cas échéant corrigée par l'intermédiaire de d'outils mécaniques, par exemple de pinces.

10. Procédé selon la revendication 9, **caractérisé par le fait que** la position des bagages le cas échéant, en présence de dysfonctionnements, est affichée par le système optique de reconnaissance d'images et qu'avec l'aide d'une visualisation tridimensionnelle l'utilisation des outils mécaniques, par exemple d'outils de préhension, est pilotée par un opérateur aux fins de corriger les dysfonctionnements.

11. Dispositif pour la mise en oeuvre du procédé selon une des revendications précédentes, avec une installation de transport des bagages disposée dans une installation aéroportuaire, qui est munie de moyens pour saisir la destination du bagage et est reliée à un système d'ordinateurs qui contrôle le déplacement des moyens de transport et des moyens de commande, l'installation de transport de bagages comportant au moins un poste de dépôt et au moins un poste de regroupement ainsi qu'au moins un poste de chargement, **caractérisé par le fait qu'**il est prévu dans la région du poste de dépôt des moyens supplémentaires qui saisissent de manière automatique des paramètres déterminés des bagages déposés, tels que le poids, la forme, le volume et la consistance ainsi que la classe de vol et mettent ces données à disposition de l'ordinateur qui contrôle l'installation de transport de bagages et commande conformément aux données concernées le transport des bagages vers le poste de chargement concerné.

12. Dispositif selon la revendication 11, **caractérisé par le fait qu'**il est prévu pour le chargement des outils de chargement automatisés, tels que par exemple des robots et/ou des outils de préhension.

13. Dispositif selon la revendication 11 ou 12, **caractérisé par le fait qu'**il est prévu un moyen de transport pour le transfert de moyens de chargement automatisés aux postes de chargement.
